# EUROPEAN PATENT SPECIFICATION

(11) **EP 4 297 158 B1**
(45) Date of publication and mention of the grant of the patent: **19.08.2026**
(21) Application number: 22881220.2
(22) Date of filing: 13.09.2022
(51) Int. Cl.: H01M 50/211, H01M 50/247, H01M 10/42, H01M 50/242, H01M 50/209, H01M 50/50, H01M 50/271

(54) **BATTERY MODULE HAVING EXCELLENT IMPACT RESISTANCE**
BATTERIEMODUL MIT HERVORRAGENDER SCHLAGFESTIGKEIT
MODULE DE BATTERIE PRÉSENTANT UNE EXCELLENTE RÉSISTANCE AUX CHOCS

(30) Priority: 14.10.2021 KR 20210136369
(43) Date of publication of application: 27.12.2023
(73) Proprietor: LG Energy Solution, Ltd., Seoul 07335 (KR)
(72) Inventor: JEON, Ji Hye, Daejeon 34122 (KR)
(74) Representative: Plasseraud IP
(86) International application number: PCT/KR2022/013588
(87) International publication number: WO 2023/063591

(56) References cited:
- EP-A1- 3 703 155
- KR-A- 20130 070 740
- KR-A- 20140 096 197
- KR-A- 20140 100 291
- KR-A- 20150 019 382
- KR-A- 20150 019 382
- KR-A- 20150 019 728
- KR-A- 20210 091 556

## Description

### [Technical Field]

This application claims the benefit of priority to Korean Patent Application No. 2021-0136369 filed on October 14, 2021.

The present invention, defined by the annexed claim 1, relates to a battery module having excellent impact resistance, and more particularly to a battery module having excellent impact resistance configured such that a seating portion capable of performing surface-contact support is formed at a frame, whereby weld quality is improved, frictional sound is reduced, and rigidity of the frame is increased.

### [Background Art]

With recent development of alternative energies due to air pollution and energy depletion caused as the result of use of fossil fuels, demand for secondary batteries capable of storing electrical energy that is produced has increased. The secondary batteries, which are capable of being charged and discharged, are intimately used in daily life. For example, the secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle.

Meanwhile, when a device is a laptop computer, reduction in weight of the battery pack is important. In addition, the battery pack must have high impact resistance and unnecessary noise must not be generated in the battery pack when in use.

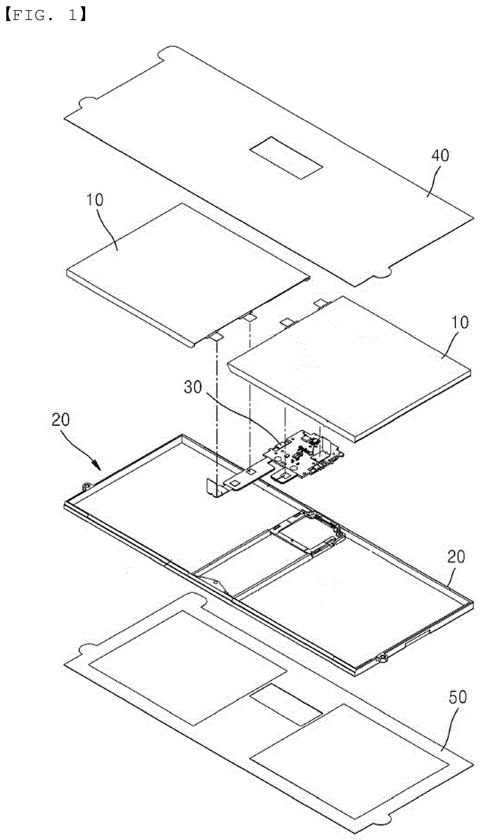

FIG. 1 is an exploded perspective view of a conventional battery pack for laptop computers. As shown in FIG. 1, the battery pack includes a pair of battery cells 10, a frame 20 configured to receive the battery cells 10, a protection circuit module 30 seated on a middle part of the frame 20, an upper cover 40 configured to cover an upper surface of the frame 20, and a lower cover 50 configured to support a lower surface of the frame 20.

In general, leads of the battery cells are connected to the protection circuit module by spot welding or soldering. Even when slight vibration or impact occurs during this process, short circuit may occur at a weld portion, and therefore welding must be performed in the state in which a region to be welded is stably supported.

In addition, for the conventional battery pack, the frame has a linear structure, whereby it is difficult to expect sufficient rigidity when external impact is applied. Furthermore, the conventional battery pack has a structure in which it is difficult to sufficiently support the protection circuit module 30 located between the battery cells 10, and therefore there is a problem in that there is a high possibility of frictional noise being generated due to pressing or shaking when being used in a laptop computer.

### (Prior Art Documents)

(Patent Document 1) Korean Registered Patent Publication No. 2016753 (published on October 21, 2019)
(Patent Document 2) European Patent Application No. 3703155 (published on 2 September 2000)
(Patent Document 3) Korean Registered Patent Application No. 2021-0091556 (published on 22 July 2021)
(Patent Document 4) Korean Registered Patent Application No. 2015-0019382 (published on 25 February 2015)

### [Disclosure]

### [Technical Problem]

The present invention has been made in view of the above problems, and it is an object of the present invention to provide a battery module configured such that, when being mounted in a device, rigidity of the battery module is secured against external force, such as shaking or pressing, and furthermore generation of unnecessary noise is reduced.

It is another object of the present invention to provide a battery module configured such that weld quality is improved when the battery module is assembled.

### [Technical Solution]

In order to accomplish the above objects, a battery module according to the present invention includes a frame unit (100) having a rectangular structure in which an upper surface and a lower surface of the frame unit are open, a first cover (200) protecting one surface of the frame unit (100), a second cover (300) protecting the other surface of the frame unit (100), two battery cells (400) received in the frame unit (100), and a BMU (500) electrically connected to the two battery cells (400), wherein the frame unit

(100) includes a frame body (110) including a first frame (111) and a second frame (112) connected to each other in a state of being spaced apart from each other by a predetermined distance such that the two battery cells (400) are horizontally received therein while facing each other, each of the first frame and the second frame having a quadrangular shape, and a seating portion located in the middle of the frame body (110) such that the BMU (500) in surface contact with the seating portion is located between the two battery cells (400), an upper surface of the seating portion being flat, the seating portion protruding by a predetermined height.

Also, in the battery module according to the present invention, the seating portion includes a first seating portion (140) and a second seating portion (160), the first seating portion (140) is located in the vicinity of one side of the first frame (111), the first seating portion comprising a 1-1 seating portion (141), a 1-2 seating portion (142), and a 1-3 seating portion (143), the second seating portion (160) is located in the vicinity of one side of the second frame (112), the second seating portion comprising a 2-1 seating portion (161), a 2-2 seating portion (162), and a 2-3 seating portion (163), the 1-1 seating portion (141), the 1-2 seating portion (142), the 2-1 seating portion (161), and the 2-2 seating portion (162) have a same upper surface area and a same height, and the 1-3 seating portion (143) and the 2-3 seating portion (163) have the same height as the 1-1 seating portion (141) but have a smaller upper surface area than the same upper surface area.

Also, in the battery module according to the present invention, the 1-1 seating portion (141) and the 2-3 seating portion (163) may face each other, the 1-2 seating portion (142) and the 2-2 seating portion (162) may face each other, and the 1-3 seating portion (143) and the 2-1 seating portion (161) may face each other.

Also, the battery module according to the present invention may further include a rib (170) provided in the vicinity of the first seating portion (140) and the second seating portion (160), the rib being supporting the BMU (500).

Also, in the battery module according to the present invention, the rib (170) may include a first rib (171) connecting the 1-1 seating portion (141) and the 2-3 seating portion (163) to each other, a second rib (172) connecting the 1-2 seating portion (142) and the 2-2 seating portion (162) to each other, and a third rib (173) connecting the 1-3 seating portion (143) and the 2-1 seating portion (161) to each other, wherein the first rib (171), the second rib (172), and the third rib (173) may have the same height as the 1-1 seating portion (141).

Also, in the battery module according to the present invention, the rib (170) may further include a pair of fourth ribs (174) located between the first frame (111) and the second frame (112), the fourth ribs facing each other.

Also, in the battery module according to the present invention, each of the fourth ribs (174) may have the same height as the first rib (171).

Also, in the battery module according to the present invention, the two battery cells (400) may include a first battery cell (410) received in the first frame (111), the first battery cell including a 1-1 lead (412) and a 1-2 lead (413), and a second battery cell (420) received in the second frame (112), the second battery cell including a 2-1 lead (422) and a 2-2 lead (423), wherein the 1-1 lead (412) may be located overlying the 1-1 seating portion (141), the 1-2 lead (413) may be located overlying the 1-2 seating portion (142), the 2-1 lead (422) may be located overlying the 2-1 seating portion (161), and the 2-2 lead (423) may be located overlying the 2-2 seating portion (162).

Also, in the battery module according to the present invention, each of the 1-1 lead (412) and the 2-1 lead (422) may be a negative electrode lead, and each of the 1-2 lead (413) and the 2-2 lead (423) may be a positive electrode lead.

Also, in the battery module according to the present invention, the 1-1 lead (412), the 2-1 lead (422), the 1-2 lead (413), and the 2-2 lead (423) may be each disposed on an upper surface of the BMU (500).

Also, the battery module according to the present invention may further include a protective cover (600) disposed on the upper surface of the BMU (500), the protective cover being configured to protect the 1-1 lead (412), the 2-1 lead (422), the 1-2 lead (413), and the 2-2 lead (423).

Also, the battery module according to the present invention may further include a bar-shaped auxiliary plate (120) provided at the first frame (111) and/or the second frame (112), the auxiliary plate supporting the two battery cells.

Also, the battery module according to the present invention may further include a first bar-shaped auxiliary plate (121) extending from the first frame (111) by a predetermined length, one side of the first bar-shaped auxiliary plate fixed to the first frame; and a second bar-shaped auxiliary plate (122) extending from the second frame (112) by a predetermined length, one side of the second bar-shaped auxiliary plate fixed to the second frame.

### [Advantageous Effects]

As is apparent from the above description, a battery module having excellent impact resistance according to the present invention has a merit in that seating portions capable of performing surface-contact support are provided at a frame unit under a part at which leads and a BMU are welded, whereby it is possible to secure uniform weld quality.

In addition, the battery module having excellent impact resistance according to the present invention has an advantage in that tight contact area between the leads and the BMU is increased by the seating portions capable of performing surface-contact support, whereby it is possible to minimize generation of noise, such as frictional sound.

Furthermore, the battery module having excellent impact resistance according to the present invention has a merit in that a plurality of ribs configured to connect the planar seating portions to each other is further provided in addition to the seating portions, whereby it is possible to improve rigidity of the frame unit, and therefore it is possible to more stably protect the battery module from external impact.

### [Description of Drawings]

FIG. 1 is an exploded perspective view showing a conventional battery pack.
FIG. 2 is a perspective view of a battery module according to a preferred embodiment of the present invention when viewed in one direction.
FIG. 3 is a perspective view of the battery module according to the preferred embodiment of the present invention when viewed in the other direction.
FIG. 4 is a perspective view of the battery module shown in FIG. 2 with a first cover separated therefrom.
FIG. 5 is a perspective view of a pair of pouch-shaped battery cells that is received in a frame body.
FIG. 6 is a perspective view of a frame unit constituting the battery module according to the preferred embodiment of the present invention.
FIG. 7 is an enlarged perspective view of a seating portion in the frame unit shown in FIG. 6.

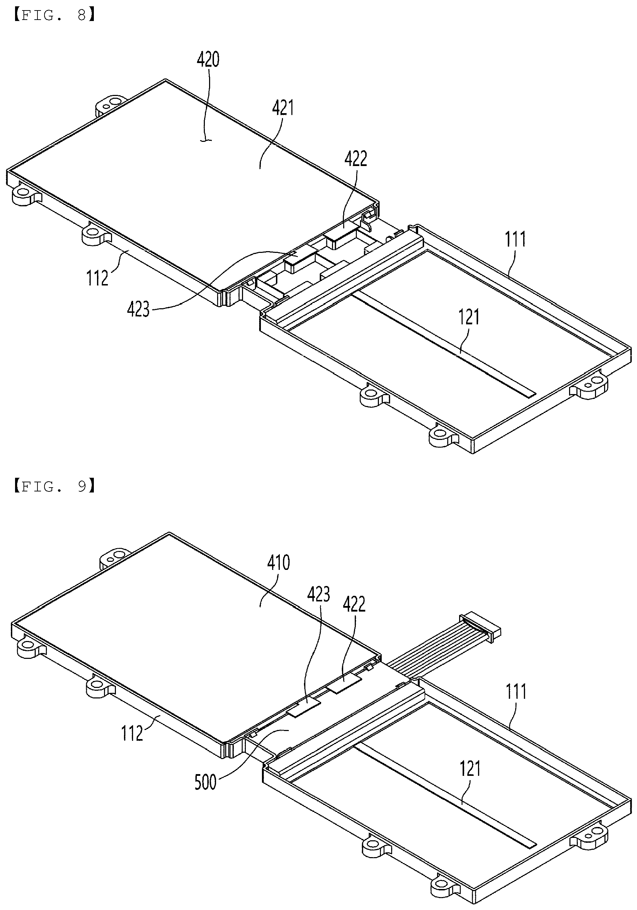

FIG. 8 is a perspective view showing the state in which one pouch-shaped battery cell is seated in the frame unit shown in FIG. 6.
FIG. 9 is a perspective view showing the state in which one pouch-shaped battery cell and a protection circuit unit are mounted in the frame unit shown in FIG. 6.

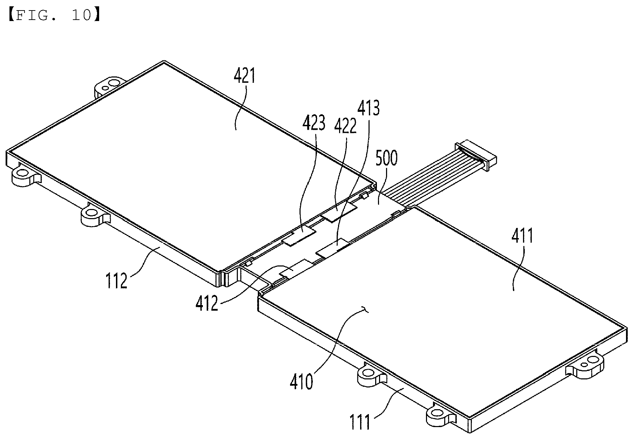

FIG. 10 is a perspective view showing the state in which two pouch-shaped battery cells and a protection circuit unit are mounted in the frame unit shown in FIG. 6.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery module having excellent impact resistance according to the present invention will be described with reference to the accompanying drawings.

The battery module according to the present invention is suitable for a laptop computer; however, the present invention is not limited thereto.

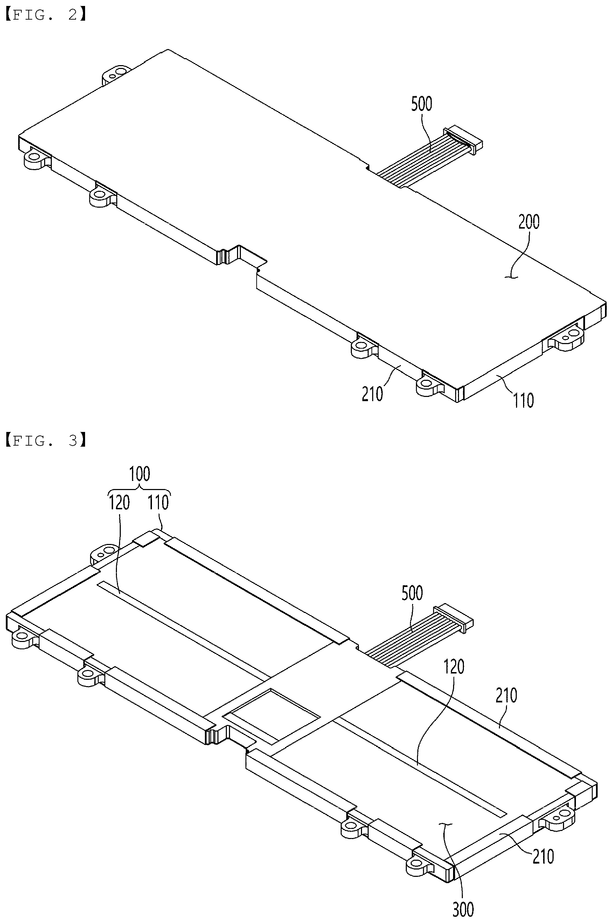

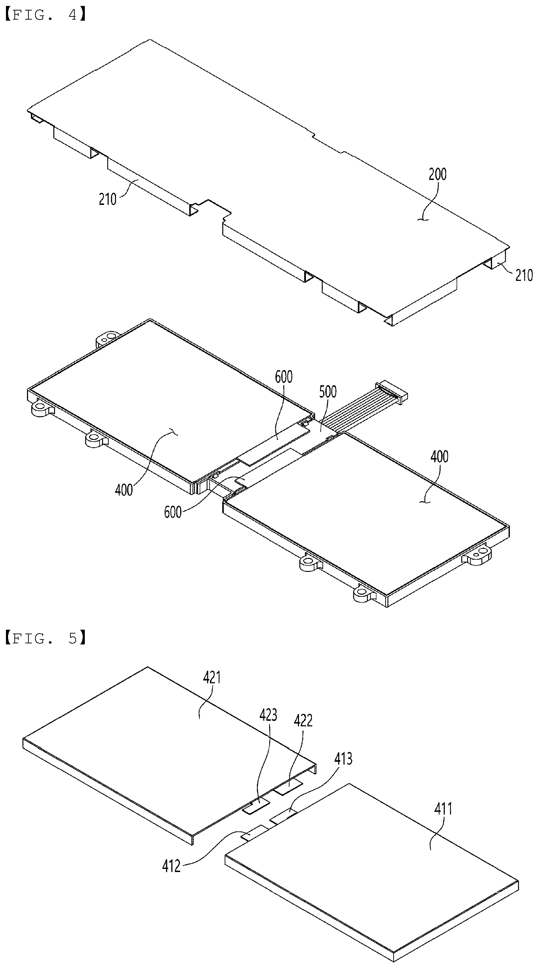

FIG. 2 is a perspective view of a battery module according to a preferred embodiment of the present invention when viewed in one direction, FIG. 3 is a perspective view of the battery module according to the preferred embodiment of the present invention when viewed in the other direction, and FIG. 4 is a perspective view of the battery module shown in FIG. 2 with a first cover separated therefrom.

Referring to FIGs. 2 to 4, the battery module according to the preferred embodiment of the present invention includes a frame unit 100, a first cover 200, a second cover 300, a battery cell 400, a BMU 500, and a protective cover 600.

The frame unit 100 is formed so as to have an approximately rectangular structure in which an upper surface and a lower surface of the frame unit are open, and is configured to receive and fix the battery cell 400. A more detailed description of the frame unit will be given below.

The first cover 200 is mounted to one surface of the frame unit 100, i.e. an upper surface of the frame unit, as shown in FIGs. 2 to 4. It is preferable for the first cover to be a plate sufficient to cover the entirety of one surface of the frame unit 100, and it is more preferable for a plurality of bent portions 210 to be provided along an edge of the first cover so as not to be easily separated from the frame unit 100 after being coupled thereto.

Here, the shape of each of the bent portions 210 is not particularly restricted as long as the bent portion is capable of wrapping a part of the frame unit 100. For example, when the bent portion is formed by performing perpendicular bending twice, the bent portion may wrap a part of a side surface and a part of a lower surface of the frame unit 100, whereby the first cover 200 may be fixed to the frame unit 100 without a separate fastening means.

The second cover 300 is located at the other surface of the frame unit 100, and has a plate shape having a size sufficient to cover the entirety of the other surface of the frame unit 100.

Since the first cover 200 and the second cover 300 are located at the upper surface and a lower surface of the frame unit 100, as described above, it is possible to protect the battery cell 400 received in the frame unit 100 from external impact and furthermore to prevent introduction of foreign matter from the outside.

The battery cell 400 supplies electricity to a device (not shown) after being received in the frame unit 100. A more detailed description of the battery cell will be given below.

The battery management unit (BMU) 500 is mounted in the middle of the frame unit 100, and performs functions to control power that is supplied to the device (not shown) through electrical connection with the battery cell 400, to recognize overcharging, overdischarging, or overcurrent, and to prevent overheating or explosion that may occur due thereto. The BMU 500 is a known device, and therefore a detailed description thereof will be omitted.

The protective cover 600 is seated on an upper surface of the BMU 500, more specifically on an upper part of a lead of the battery cell 400 connected to the BMU 500, and performs functions to protect the lead and to further increase the force of fixation between the BMU 500 and the lead. It is preferable for the protective cover 600 to have a plate shape sufficient to completely cover the lead, and it is more preferable for the protective cover to be an insulator for short circuit prevention.

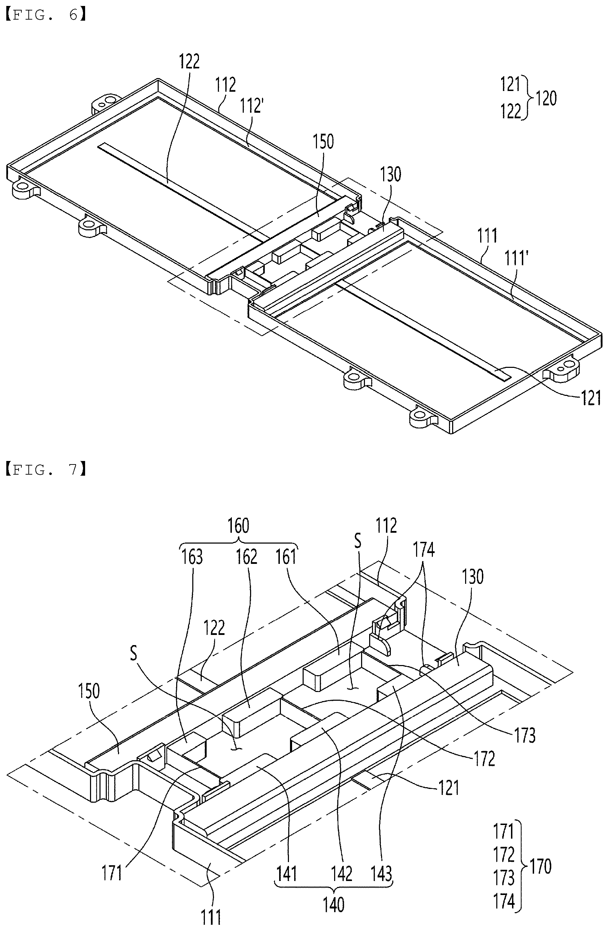

FIG. 5 is a perspective view of a pair of pouch-shaped battery cells that is received in a frame body, FIG. 6 is a perspective view of the frame unit constituting the battery module according to the preferred embodiment of the present invention, and FIG. 7 is an enlarged perspective view of a seating portion in the frame unit shown in FIG. 6.

When describing the battery cell 400 first with reference to FIG. 5, the battery cell 400 includes a first battery cell 410 and a second battery cell 420.

Each battery cell includes a case, a cell assembly, and a lead. Specifically, the first battery cell 410 includes a first case 411 configured to receive the cell assembly, a 1-1 lead 412, and a 1-2 lead 413, and the second battery cell 420 includes a second case 421 configured to receive the cell assembly, a 2-1 lead 422, and a 2-2 lead 423.

Here, each of the first case 411 and the second case 421, each of which receives the cell assembly, is generally configured to have a laminate sheet structure including an inner layer, a metal layer, and an outer layer. The inner layer is disposed in direct contact with the cell assembly, and therefore the inner layer must exhibit high insulation properties and high resistance to an electrolytic solution. In addition, the inner layer must exhibit high sealability in order to hermetically seal the cell case from the outside, i.e. a thermally-bonded sealed portion between inner layers must exhibit excellent thermal bonding strength. The inner layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability. However, the present invention is not limited thereto, and polypropylene, which exhibits excellent mechanical properties, such as tensile strength, rigidity, surface hardness, and impact resistance, and excellent chemical resistance, is the most preferably used.

The metal layer, which is disposed so as to abut the inner layer, corresponds to a barrier layer configured to prevent moisture or various kinds of gas from permeating into the battery from the outside. An aluminum thin film, which is lightweight and easily shapeable, may be used as a preferred material for the metal layer.

The outer layer is provided on the other surface of the metal layer. The outer layer may be made of a heat-resistant polymer that exhibits excellent tensile strength, resistance to moisture permeation, and resistance to air transmission such that the outer layer exhibits high heat resistance and chemical resistance while protecting the cell assembly. As an example, the outer layer may be made of nylon or polyethylene terephthalate; however, the present invention is not limited thereto.

The cell assembly, which is received in the case, may be a jelly-roll type cell assembly, which is configured to have a structure in which a long sheet type positive electrode and a long sheet type negative electrode are wound in the state in which a separator is interposed therebetween, a stacked type cell assembly including unit cells, each of which is configured to have a structure in which a rectangular positive electrode and a rectangular negative electrode are stacked in the state in which a separator is interposed therebetween, a stacked and folded type cell assembly, which is configured to have a structure in which unit cells are wound using a long separation film, or a laminated and stacked type cell assembly, which is configured to have a structure in which unit cells are stacked in the state in which a separator is interposed therebetween and are then attached to each other. However, the present invention is not limited thereto.

Meanwhile, each of the 1-2 lead 413 of the first battery cell 410 and the 2-2 lead 423 of the second battery cell 420, which are positive electrode leads, may be located at a middle part of one short side of a corresponding one of the cases in a state of protruding therefrom by a predetermined length, and each of the 1-1 lead 412 of the first battery cell 410 and the 2-1 lead 422 of the second battery cell 420, which are negative electrode leads, may be located in the vicinity of an edge of one short side of a corresponding one of the cases.

As previously described, the frame unit 100 is configured to wrap side surfaces of the pair of battery cells 400 so as to protect the battery cells and to fix the battery cells 400 in the state in which the BMU 500 is received therebetween.

The frame unit 100 includes a frame body 110, an auxiliary plate 120, a first support wall 130, a first seating portion 140, a second support wall 150, a second seating portion 160, and a rib 170.

First, the frame body 110 includes a first frame 111 having a quadrangular shape and a second frame 112 having a quadrangular shape. The first frame 111 and the second frame 112 are spaced apart from each other by a predetermined distance to define a space portion S therebetween such that first seating portion 140, the second seating portion 160, and the rib 170 are located in the space portion.

Specifically, the first battery cell 410 is received in the first frame 111, and therefore the first frame 111 corresponds in external shape and size to the first battery cell 410. In addition, the second battery cell 420 is received in the second frame 112, and the second frame 112 also corresponds in external shape and size to the second battery cell 420.

Here, the first battery cell 410 and the second battery cell 420 received in the respective frames are located horizontally. In addition, leads of the battery cells are disposed facing each other so as to be electrically connected to the BMU 500.

Meanwhile, it is preferable for the first frame 111 and the second frame 112 to respectively have a first support projection 111' and a second support projection 112' bent from the respective frames by a predetermined angle and extending therefrom so as to support front edges or rear edges of the first battery cell 410 and the second battery cell 420, respectively.

The auxiliary plate 120 may be constituted by a first auxiliary plate 121 and a second auxiliary plate 122.

The first auxiliary plate 121 may have a bar shape extending from the first frame 111 by a predetermined length in the state in which one side thereof is fixed thereto, and the second auxiliary plate 122 may have a bar shape extending from the second frame 112 by a predetermined length in the state in which one side thereof is fixed thereto. Of course, the other side of the first auxiliary plate may be fixed to the first frame 111.

When the first auxiliary plate 121 and the second auxiliary plate 122 are provided, it is possible to more stably support the first battery cell 410 and the second battery cell 420.

Although only one first auxiliary plate 121 and only one second auxiliary plate 122 are shown as being provided in the drawings, it is obvious that a plurality of first auxiliary plates or a plurality of second auxiliary plates may be provided as needed, or the first auxiliary plate and the second auxiliary plate may be omitted.

Next, the first support wall 130 and the second support wall 150 will be described. In general, for the pouch-shaped battery cell, a terrace portion is formed in a direction in which the electrode lead protrudes due to a pocket portion configured to receive the cell assembly, i.e. a step is formed due to the depth or height of the pocket portion. The first support wall 130 and the second support wall 150 support the terrace portion, which corresponds to the step, to prevent bending or deformation of the lead and furthermore to minimize movement of the case.

That is, as shown in FIG. 6, the first support wall 130 is provided at the first frame 111, and the second support wall 150 is provided at the second frame 112. The first support wall 130 and the second support wall 150 are disposed so as to be adjacent to the space portion S.

Meanwhile, each of the first support wall 130 and the second support wall 150 may have a hollow quadrangular pillar shape or a perpendicularly bent shape.

Next, the seating portions will be described. The seating portions are disposed at a place at which the leads of the first battery cell 410 and the second battery cell 420 and the BMU 500 are located, i.e. in the space portion S.

The seating portions include the first seating portion 140 and the second seating portion 160. The first seating portion 140 is disposed in the vicinity of one side of the first frame 111, more specifically the vicinity of the first support wall 130, and the second seating portion 160 is disposed in the vicinity of one side of the second frame 112, more specifically the vicinity of the second support wall 150.

The first seating portion 140 is constituted by a 1-1 seating portion 141, a 1-2 seating portion 142, and a 1-3 seating portion 143, which are spaced apart from each other by a predetermined distance.

Here, the 1-1 seating portion 141, the 1-2 seating portion 142, and the 1-3 seating portion 143 protrude from a bottom of the space portion S by the same height, and an upper part of each seating portion is constituted by a plane having a predetermined area.

A bottom of one edge of the BMU 500 is seated on the 1-1 seating portion 141, the 1-2 seating portion 142, and the 1-3 seating portion 143 in tight contact therewith, and the 1-1 lead 412 and the 1-2 lead 413 of the first battery cell 410 are located on the upper surface of the BMU 500 in a state of being electrically connected thereto.

Here, the 1-1 lead 412 and the 1-2 lead 413 are coupled to the BMU 500 by welding, and uniformity in weld quality may be secured by the 1-1 seating portion 141 and the 1-2 seating portion 142. That is, since each of the 1-1 seating portion 141 and the 1-2 seating portion 142 is constituted by a plane, welding defects may be minimized while welding operation is easily performed.

In addition, it is possible to remarkably reduce generation of frictional sound due to an increase in tight contact area between the frame and the BMU 500, and furthermore it is possible to increase rigidity of the frame.

Meanwhile, since the 1-3 seating portion 143 is configured to support a part of the edge of the BMU 500 in surface contact in order to reduce generation of frictional sound, it is preferable for the 1-3 seating portion to have a smaller area than the 1-1 seating portion 141 and the 1-2 seating portion 142, and it is more preferable for the 1-1 seating portion 141 and the 1-2 seating portion 142 to have the same area since the 1-1 lead 412 and the 1-2 lead 413 are located respectively on the 1-1 seating portion 141 and the 1-2 seating portion 142.

In addition, the interior of each of the 1-1 seating portion 141, the 1-2 seating portion 142, and the 1-3 seating portion 143 is empty, which is advantageous in that it is possible to reduce the overall weight of the battery module.

The second seating portion 160 is constituted by a 2-1 seating portion 161, a 2-2 seating portion 162, and a 2-3 seating portion 163, which are spaced apart from each other by a predetermined distance.

In the same manner as the first seating portion 140, the 2-1 seating portion 161, the 2-2 seating portion 162, and the 2-3 seating portion 163 protrude from the bottom of the space portion S by the same height, the 2-1 seating portion 161 and the 2-2 seating portion 162 have the same area, and 2-3 seating portion 163 has a smaller area than the 2-1 seating portion and the 2-2 seating portion. These reasons were described in connection with the first seating portion 140, and therefore a duplicative description thereof will be omitted.

Also, in the same manner as the first seating portion 140, a bottom of the other edge of the BMU 500 is seated on the 2-1 seating portion 161 to the 2-3 seating portion 163 in tight contact therewith, and the 2-1 lead 422 and the 2-2 lead 423 of the second battery cell 420 are located on the upper surface of the BMU 500 in a state of being electrically connected thereto.

Meanwhile, as shown in FIG. 7, the 1-1 seating portion 141 and the 2-3 seating portion 163 are located facing each other, the 1-2 seating portion 142 and the 2-2 seating portion 162 are located facing each other, and the 1-3 seating portion 143 and the 2-1 seating portion 161 are located facing each other.

Next, the rib 170 will be described. The rib 170 is disposed in the space portion S to support the electrode leads of the first battery cell 410 and the second battery cell 420 and the BMU 500.

The rib 170 has a plate-shaped upright structure, and may be constituted by a plurality of ribs, i.e. a first rib 171, a second rib 172, a third rib 173, and a fourth rib 174.

Here, the first rib 171 is located so as to connect the 1-1 seating portion 141 and the 2-3 seating portion 163 to each other, the second rib 172 is located so as to connect the 1-2 seating portion 142 and the 2-2 seating portion 162 to each other, and the third rib 173 is located so as to connect the 1-3 seating portion 143 and the 2-1 seating portion 161 to each other.

Since the electrode leads and the BMU 500 are supported by the ribs, therefore, it is possible to impart higher stability. In particular, since the seating portions located facing each other are connected to each other via the respective ribs, it is possible to increase overall rigidity of the frame.

The fourth rib 174 is located between the first frame 111 and the second frame 112, and is constituted by a pair of ribs facing each other. The fourth rib supports one edge of the BMU 500, whereby it is possible to prevent bending or drooping of the BMU.

Meanwhile, it is preferable for the first rib 171, the second rib 172, the third rib 173, and the fourth rib 174 to have the same height as the 1-1 seating portion 141 in order to uniformly support the electrode leads and the BMU 500.

The present invention may provide a device including a battery module having at least one of the above features, and the device may be a laptop computer, an electric vehicle, a hybrid electric vehicle, or a plug-in hybrid electric vehicle.

### (Description of Reference Symbols)

- 100:: Frame unit
- 110:: Frame body
- 111:: First frame 111': First support projection
- 112:: Second frame 112': Second support projection
- 120:: Auxiliary plate
- 121:: First auxiliary plate 122: Second auxiliary
- 130:: First support wall
- 140:: First seating portion
- 141:: 1-1 seating portion 142: 1-2 seating portion
- 143:: 1-3 seating portion
- 150:: Second support wall
- 160:: Second seating portion
- 161:: 2-1 seating portion 162: 2-2 seating portion
- 163:: 2-3 seating portion
- 170:: Rib
- 171:: First rib 172: Second rib
- 173:: Third rib 174: Fourth rib
- 200:: First cover
- 210:: Bent portion
- 300:: Second cover
- 400:: Battery cell
- 410:: First battery cell
- 411:: First case 412: 1-1 lead
- 413:: 1-2 lead
- 420:: Second battery cell
- 421:: Second case 422: 2-1 lead
- 423:: 2-2 lead
- 500:: BMU
- 600:: Protective cover
- S:: Space portion

## Claims

1. A battery module comprising:
a frame unit (100) having a rectangular structure in which an upper surface and a lower surface of the frame unit are open;
a first cover (200) protecting one surface of the frame unit (100);
a second cover (300) protecting the other surface of the frame unit (100);
two battery cells (400) received in the frame unit (100); and
a BMU (500) electrically connected to the two battery cells (400),
wherein the frame unit (100) comprises:
a frame body (110) comprising a first frame (111) and a second frame (112) connected to each other in a state of being spaced apart from each other by a predetermined distance such that the two battery cells (400) are horizontally received therein while facing each other, each of the first frame (111) and the second frame (112) having a quadrangular shape; and
a seating portion (140, 160) located in a middle of the frame body (110) such that the BMU (500) in surface contact with the seating portion is located between the two battery cells (400), an upper surface of the seating portion (140, 160) being flat, the seating portion (140, 160) protruding by a predetermined height, wherein the seating portion comprises a first seating portion (140) and a second seating portion (160),
the first seating portion (140) is located in the vicinity of one side of the first frame (111), the first seating portion (140) comprising a 1-1 seating portion (141), a 1-2 seating portion (142),
the second seating portion (160) is located in the vicinity of one side of the second frame (112), the second seating portion (160) comprising a 2-1 seating portion (161), a 2-2 seating portion (162),
the 1-1 seating portion (141), the 1-2 seating portion (142), the 2-1 seating portion (161), and the 2-2 seating portion (162) have a same upper surface area and a same height, **characterised in that** the first seating portion (140) comprises a 1-3 seating portion (143) and the second seating portion (160) comprises a 2-3 seating portion (163), and **characterised in that**
the 1-3 seating portion (143) and the 2-3 seating portion (163) have the same height as the 1-1 seating portion (141) but have a smaller upper surface area than the same upper surface area.

2. The battery module according to claim 1, wherein the 1-1 seating portion (141) and the 2-3 seating portion (163) face each other, the 1-2 seating portion (142) and the 2-2 seating portion (162) face each other, and the 1-3 seating portion (143) and the 2-1 seating portion (161) face each other.

3. The battery module according to claim 1, further comprising a rib (170) provided in the vicinity of the first seating portion (140) and the second seating portion (160) the rib (170) supporting the BMU (500).

4. The battery module according to claim 3, wherein the rib (170) comprises a first rib (171) connecting the 1-1 seating portion (141) and the 2-3 seating portion (163) to each other, a second rib (172) connecting the 1-2 seating portion (142) and the 2-2 seating portion (162) to each other, and a third rib (173) connecting the 1-3 seating portion (143) and the 2-1 seating portion (161) to each other, and
the first rib (171), the second rib (172), and the third rib (173) have the same height as the 1-1 seating portion (141).

5. The battery module according to claim 4, wherein the rib (170) further comprises a pair of fourth ribs (174) located between the first frame (111) and the second frame (112), the fourth ribs (174) facing each other.

6. The battery module according to claim 5, wherein each of the fourth ribs (174) has the same height as the first rib (171).

7. The battery module according to claim 2, wherein the two battery cells (400) comprise a first battery cell received in the first frame (111), the first battery cell comprising a 1-1 lead and a 1-2 lead, and a second battery cell received in the second frame (112), the second battery cell comprising a 2-1 lead and a 2-2 lead, and
the 1-1 lead is located overlying the 1-1 seating portion (141), the 1-2 lead is located overlying the 1-2 seating portion (142), the 2-1 lead is located overlying the 2-1 seating portion (161), and the 2-2 lead is located overlying the 2-2 seating portion (162).

8. The battery module according to claim 7, wherein each of the 1-1 lead and the 2-1 lead is a negative electrode lead, and each of the 1-2 lead and the 2-2 lead is a positive electrode lead.

9. The battery module according to claim 7, wherein the 1-1 lead, the 2-1 lead, the 1-2 lead, and the 2-2 lead are each disposed on an upper surface of the BMU (500).

10. The battery module according to claim 9, further comprising a protective cover (600) disposed on the upper surface of the BMU (500), the protective cover being configured to protect the 1-1 lead, the 2-1 lead, the 1-2 lead, and the 2-2 lead.

11. The battery module according to claim 1, further comprising a bar-shaped auxiliary plate (120) provided at the first frame and/or the second frame, the auxiliary plate (120) supporting the two battery cells (400).

12. The battery module according to claim 10, further comprising:
a first bar-shaped auxiliary plate (121) extending from the first frame (111) by a predetermined length, one side of the first bar-shaped auxiliary plate fixed to the first frame; and
a second bar-shaped auxiliary plate (122) extending from the second frame (112) by a predetermined length, one side of the second bar-shaped auxiliary plate fixed to the second frame.

## Patentansprüche

1. Batteriemodul, umfassend:
eine Rahmeneinheit (100) mit einer rechteckigen Struktur, bei der eine obere Fläche und eine untere Fläche der Rahmeneinheit offen sind;
eine erste Abdeckung (200), die eine Fläche der Rahmeneinheit (100) schützt;
eine zweite Abdeckung (300), die die andere Fläche der Rahmeneinheit (100) schützt;
zwei Batteriezellen (400), die in der Rahmeneinheit (100) aufgenommen sind; und
eine BMU (500), die elektrisch mit den beiden Batteriezellen (400) verbunden ist,
wobei die Rahmeneinheit (100) umfasst:
einen Rahmenkörper (110), der einen ersten Rahmen (111) und einen zweiten Rahmen (112) umfasst, die in einem Zustand miteinander verbunden sind, in dem sie durch einen vorbestimmten Abstand voneinander beabstandet sind, so dass die beiden Batteriezellen (400) horizontal darin aufgenommen sind, während sie einander zugewandt sind, wobei jeder des ersten Rahmens (111) und des zweiten Rahmens (112) eine viereckige Form aufweist; und
einen Sitzabschnitt (140, 160), der in einer Mitte des Rahmenkörpers (110) angeordnet ist, so dass die BMU (500) in Oberflächenkontakt mit dem Sitzabschnitt zwischen den beiden Batteriezellen (400) angeordnet ist, wobei eine obere Fläche des Sitzabschnitts (140, 160) flach ist, wobei der Sitzabschnitt (140, 160) um eine vorbestimmte Höhe vorsteht,
wobei der Sitzabschnitt einen ersten Sitzabschnitt (140) und einen zweiten Sitzabschnitt (160) umfasst,
der erste Sitzabschnitt (140) in der Nähe einer Seite des ersten Rahmens (111) angeordnet ist, wobei der erste Sitzabschnitt (140) einen Sitzabschnitt 1-1 (141) und einen Sitzabschnitt 1-2 (142) umfasst,
der zweite Sitzabschnitt (160) in der Nähe einer Seite des zweiten Rahmens (112) angeordnet ist, wobei der zweite Sitzabschnitt (160) einen Sitzabschnitt 2-1 (161) und einen Sitzabschnitt 2-2 (162) umfasst,
der Sitzabschnitt 1-1 (141), der Sitzabschnitt 1-2 (142), der Sitzabschnitt 2-1 (161) und der Sitzabschnitt 2-2 (162) denselben oberen Flächeninhalt und dieselbe Höhe aufweisen,
**dadurch gekennzeichnet, dass** der erste Sitzabschnitt (140) einen Sitzabschnitt 1-3 (143) umfasst und der zweite Sitzabschnitt (160) einen Sitzabschnitt 2-3 (163) umfasst, und **dadurch gekennzeichnet, dass**
der Sitzabschnitt 1-3 (143) und der Sitzabschnitt 2-3 (163) dieselbe Höhe wie der Sitzabschnitt 1-1 (141) aufweisen, aber einen kleineren oberen Flächeninhalt als derselbe obere Flächeninhalt aufweisen.

2. Batteriemodul nach Anspruch 1, wobei der Sitzabschnitt 1-1 (141) und der Sitzabschnitt 2-3 (163) einander zugewandt sind, der Sitzabschnitt 1-2 (142) und der Sitzabschnitt 2-2 (162) einander zugewandt sind, und der Sitzabschnitt 1-3 (143) und der Sitzabschnitt 2-1 (161) einander zugewandt sind.

3. Batteriemodul nach Anspruch 1, ferner umfassend eine Rippe (170), die in der Nähe des ersten Sitzabschnitts (140) und des zweiten Sitzabschnitts (160) vorgesehen ist, wobei die Rippe (170) die BMU (500) stützt.

4. Batteriemodul nach Anspruch 3, wobei die Rippe (170) eine erste Rippe (171), die den Sitzabschnitt 1-1 (141) und den Sitzabschnitt 2-3 (163) miteinander verbindet, eine zweite Rippe (172), die den Sitzabschnitt 1-2 (142) und den Sitzabschnitt 2-2 (162) miteinander verbindet, und eine dritte Rippe (173), die den Sitzabschnitt 1-3 (143) und den Sitzabschnitt 2-1 (161) miteinander verbindet, umfasst, und die erste Rippe (171), die zweite Rippe (172) und die dritte Rippe (173) dieselbe Höhe wie der Sitzabschnitt 1-1 (141) aufweisen.

5. Batteriemodul nach Anspruch 4, wobei die Rippe (170) ferner ein Paar vierter Rippen (174) umfasst, die zwischen dem ersten Rahmen (111) und dem zweiten Rahmen (112) angeordnet sind, wobei die vierten Rippen (174) einander zugewandt sind.

6. Batteriemodul nach Anspruch 5, wobei jede der vierten Rippen (174) dieselbe Höhe wie die erste Rippe (171) aufweist.

7. Batteriemodul nach Anspruch 2, wobei die beiden Batteriezellen (400) eine erste Batteriezelle, die im ersten Rahmen (111) aufgenommen ist, wobei die erste Batteriezelle eine Leitung 1-1 und eine Leitung 1-2 umfasst, und eine zweite Batteriezelle umfassen, die im zweiten Rahmen (112) aufgenommen ist, wobei die zweite Batteriezelle eine Leitung 2-1 und eine Leitung 2-2 umfasst, und die Leitung 1-1 über dem Sitzabschnitt 1-1 (141) liegend angeordnet ist, die Leitung 1-2 über dem Sitzabschnitt 1-2 (142) liegend angeordnet ist, die Leitung 2-1 über dem Sitzabschnitt 2-1 (161) liegend angeordnet ist, und die Leitung 2-2 über dem Sitzabschnitt 2-2 (162) liegend angeordnet ist.

8. Batteriemodul nach Anspruch 7, wobei jede der Leitung 1-1 und der Leitung 2-1 eine negative Elektrodenleitung ist, und jede der Leitung 1-2 und der Leitung 2-2 eine positive Elektrodenleitung ist.

9. Batteriemodul nach Anspruch 7, wobei die Leitung 1-1, die Leitung 2-1, die Leitung 1-2 und die Leitung 2-2 jeweils auf einer oberen Fläche der BMU (500) angeordnet sind.

10. Batteriemodul nach Anspruch 9, ferner umfassend eine Schutzabdeckung (600), die auf der oberen Fläche der BMU (500) angeordnet ist, wobei die Schutzabdeckung konfiguriert ist, um die Leitung 1-1, die Leitung 2-1, die Leitung 1-2 und die Leitung 2-2 zu schützen.

11. Batteriemodul nach Anspruch 1, ferner umfassend eine stangenförmige Hilfsplatte (120), die am ersten Rahmen und/oder am zweiten Rahmen vorgesehen ist, wobei die Hilfsplatte (120) die beiden Batteriezellen (400) stützt.

12. Batteriemodul nach Anspruch 10, ferner umfassend:
eine erste stangenförmige Hilfsplatte (121), die sich von dem ersten Rahmen (111) um eine vorbestimmte Länge erstreckt, wobei eine Seite der ersten stangenförmigen Hilfsplatte am ersten Rahmen befestigt ist; und
eine zweite stangenförmige Hilfsplatte (122), die sich von dem zweiten Rahmen (112) um eine vorbestimmte Länge erstreckt, wobei eine Seite der zweiten stangenförmigen Hilfsplatte am zweiten Rahmen befestigt ist.

## Revendications

1. Module de batterie comprenant :
une unité de cadre (100) ayant une structure rectangulaire dans laquelle une surface supérieure et une surface inférieure de l'unité de cadre sont ouvertes ;
un premier couvercle (200) protégeant une surface de l'unité de cadre (100) ;
un second couvercle (300) protégeant l'autre surface de l'unité de cadre (100) ;
deux cellules de batterie (400) reçues dans l'unité de cadre (100) ; et
une BMU (500) connectée électriquement aux deux cellules de batterie (400),
dans lequel l'unité de cadre (100) comprend :
un corps de cadre (110) comprenant un premier cadre (111) et un second cadre (112) connectés l'un à l'autre dans un état espacé l'un de l'autre d'une distance prédéterminée de sorte que les deux cellules de batterie (400) y sont reçues horizontalement tout en se faisant face, chacun du premier cadre (111) et du second cadre (112) ayant une forme quadrangulaire ; et
une partie d'assise (140, 160) située au milieu du corps de cadre (110) de sorte que la BMU (500) en contact de surface avec la partie d'assise est située entre les deux cellules de batterie (400), une surface supérieure de la partie d'assise (140, 160) étant plate, la partie d'assise (140, 160) faisant saillie d'une hauteur prédéterminée,
dans lequel la partie d'assise comprend une première partie d'assise (140) et une seconde partie d'assise (160),
la première partie d'assise (140) est située à proximité d'un côté du premier cadre (111), la première partie d'assise (140) comprenant une partie d'assise 1-1 (141), une partie d'assise 1-2 (142),
la seconde partie d'assise (160) est située à proximité d'un côté du second cadre (112), la seconde partie d'assise (160) comprenant une partie d'assise 2-1 (161), une partie d'assise 2-2 (162),
la partie d'assise 1-1 (141), la partie d'assise 1-2 (142), la partie d'assise 2-1 (161), et la partie d'assise 2-2 (162) ont une même aire de surface supérieure et une même hauteur,
**caractérisé en ce que** la première partie d'assise (140) comprend une partie d'assise 1-3 (143) et la seconde partie d'assise (160) comprend une partie d'assise 2-3 (163), et **caractérisé en ce que**
la partie d'assise 1-3 (143) et la partie d'assise 2-3 (163) ont la même hauteur que la partie d'assise 1-1 (141) mais ont une aire de surface supérieure plus petite que la même aire de surface supérieure.

2. Module de batterie selon la revendication 1, dans lequel la partie d'assise 1-1 (141) et la partie d'assise 2-3 (163) se font face, la partie d'assise 1-2 (142) et la partie d'assise 2-2 (162) se font face, et la partie d'assise 1-3 (143) et la partie d'assise 2-1 (161) se font face.

3. Module de batterie selon la revendication 1, comprenant en outre une nervure (170) prévue à proximité de la première partie d'assise (140) et de la seconde partie d'assise (160), la nervure (170) supportant la BMU (500).

4. Module de batterie selon la revendication 3, dans lequel la nervure (170) comprend une première nervure (171) connectant la partie d'assise 1-1 (141) et la partie d'assise 2-3 (163) l'une à l'autre, une seconde nervure (172) connectant la partie d'assise 1-2 (142) et la partie d'assise 2-2 (162) l'une à l'autre, et une troisième nervure (173) connectant la partie d'assise 1-3 (143) et la partie d'assise 2-1 (161) l'une à l'autre, et la première nervure (171), la seconde nervure (172), et la troisième nervure (173) ont la même hauteur que la partie d'assise 1-1 (141).

5. Module de batterie selon la revendication 4, dans lequel la nervure (170) comprend en outre une paire de quatrièmes nervures (174) situées entre le premier cadre (111) et le second cadre (112), les quatrièmes nervures (174) se faisant face.

6. Module de batterie selon la revendication 5, dans lequel chacune des quatrièmes nervures (174) a la même hauteur que la première nervure (171).

7. Module de batterie selon la revendication 2, dans lequel les deux cellules de batterie (400) comprennent une première cellule de batterie reçue dans le premier cadre (111), la première cellule de batterie comprenant un conducteur 1-1 et un conducteur 1-2, et une seconde cellule de batterie reçue dans le second cadre (112), la seconde cellule de batterie comprenant un conducteur 2-1 et un conducteur 2-2, et le conducteur 1-1 est situé en recouvrant la partie d'assise 1-1 (141), le conducteur 1-2 est situé en recouvrant la partie d'assise 1-2 (142), le conducteur 2-1 est situé en recouvrant la partie d'assise 2-1 (161), et le conducteur 2-2 est situé en recouvrant la partie d'assise 2-2 (162).

8. Module de batterie selon la revendication 7, dans lequel chacun du conducteur 1-1 et du conducteur 2-1 est un conducteur d'électrode négative, et chacun du conducteur 1-2 et du conducteur 2-2 est un conducteur d'électrode positive.

9. Module de batterie selon la revendication 7, dans lequel le conducteur 1-1, le conducteur 2-1, le conducteur 1-2, et le conducteur 2-2 sont chacun disposés sur une surface supérieure de la BMU (500).

10. Module de batterie selon la revendication 9, comprenant en outre un couvercle de protection (600) disposé sur la surface supérieure de la BMU (500), le couvercle de protection étant configuré pour protéger le conducteur 1-1, le conducteur 2-1, le conducteur 1-2, et le conducteur 2-2.

11. Module de batterie selon la revendication 1, comprenant en outre une plaque auxiliaire en forme de barre (120) prévue au niveau du premier cadre et/ou du second cadre, la plaque auxiliaire (120) supportant les deux cellules de batterie (400).

12. Module de batterie selon la revendication 10, comprenant en outre :
une première plaque auxiliaire en forme de barre (121) s'étendant depuis le premier cadre (111) sur une longueur prédéterminée, un côté de la première plaque auxiliaire en forme de barre étant fixé au premier cadre ; et
une seconde plaque auxiliaire en forme de barre (122) s'étendant depuis le second cadre (112) sur une longueur prédéterminée, un côté de la seconde plaque auxiliaire en forme de barre étant fixé au second cadre.
